(19) **Europäisches Patentamt European Patent Office Office européen des brevets**

(11) **EP 4 678 412 A1**

(12) **EUROPEAN PATENT APPLICATION**

(43) Date of publication:
14.01.2026 Bulletin 2026/03

(21) Application number: 25184927.9

(22) Date of filing: 24.06.2025

(51) International Patent Classification (IPC):
**B60C 1/00** (2006.01)        **C08L 9/06** (2006.01)
**B60C 11/03** (2006.01)

(52) Cooperative Patent Classification (CPC):
(C-Sets available)
**C08L 9/06; B60C 1/0016; B60C 3/04; B60C 11/03; B60C 11/0306; B60C 11/033;** B60C 2011/0025; B60C 2011/0355; B60C 2011/0367        (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 11.07.2024 JP 2024111778

(71) Applicant: **Sumitomo Rubber Industries Ltd.**
**Kobe-shi, Hyogo 651-0072 (JP)**

(72) Inventors:
• **YAMADA, Ayuko**
**Kobe-shi, 651-0072 (JP)**
• **YONEZU, Tomoki**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire having improved wet grip performance. The tire is a tire having a tread portion, wherein a tread surface of the tread portion has four circumferential main grooves, a crown rib demarcated by the circumferential main grooves, and a pair of middle ribs adjacent to the crown rib across the circumferential main grooves, a total sea ratio N (%) of the crown rib and the middle ribs is greater than 0 and less than 15, the tread portion is composed of a rubber composition including a rubber component, a filler, and a plasticizer, the plasticizer contains a copolymer resin including cyclopentadiene as a monomer component, and when a total amount of the plasticizer per 100 parts by mass of the rubber component in the rubber composition is denoted by P (parts by mass), N/P is less than 3.0.

EP 4 678 412 A1

(52) Cooperative Patent Classification (CPC): (Cont.)

C-Sets
**C08L 9/06, C08L 9/00, C08K 3/36, C08L 45/00,
C08K 3/04;
C08L 9/06, C08L 9/00, C08L 7/00, C08K 3/36,
C08L 45/00, C08K 3/04**

**Description**

BACKGROUND OF THE INVENTION

Field of the Invention

The present invention relates to a tire.

Background Art

In recent years, improvement of the wet grip performance of tires has been desired. Japanese Laid-Open Patent Publication No. 2020-41035 states that a tire rubber composition including a predetermined amount of a predetermined conjugated diene-based rubber and a predetermined amount of a predetermined conjugated diene-based polymer as a rubber component and further including a predetermined amount of a predetermined silica and a predetermined amount of a predetermined tetrazine compound is used, thereby improving wet grip performance.
However, there is still room for improvement in the wet grip performance of tires.
An object of the present invention is to provide a tire having improved wet grip performance.

SUMMARY OF THE INVENTION

The present invention is directed to a tire described below.
The tire is a tire having a tread portion, wherein

a tread surface of the tread portion has four circumferential main grooves, a crown rib demarcated by the circumferential main grooves, and a pair of middle ribs adjacent to the crown rib across the circumferential main grooves,
a total sea ratio N (%) of the crown rib and the middle ribs is greater than 0 and less than 15,
the tread portion is composed of a rubber composition including a rubber component, a filler, and a plasticizer,
the plasticizer contains a copolymer resin including cyclopentadiene as a monomer component, and
when a total amount of the plasticizer per 100 parts by mass of the rubber component in the rubber composition is denoted by P (parts by mass), N/P is less than 3.0.

According to the present invention, it is possible to provide a tire having improved wet grip performance.

BRIEF DESCRIPTION OF THE DRAWING

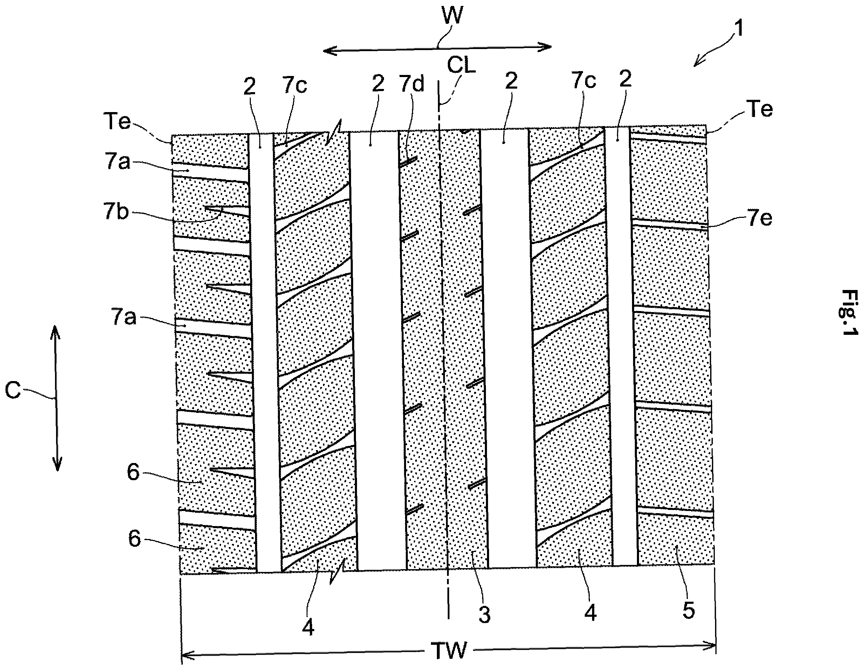

FIG. 1 schematically illustrates a tread pattern of a tire according to an embodiment of the present invention.

DETAILED DESCRIPTION

Hereinafter, a tire according to an embodiment of the present invention will be described. The tire of the present embodiment is a tire having a tread portion, wherein: a tread surface of the tread portion has four circumferential main grooves, a crown rib demarcated by the circumferential main grooves, and a pair of middle ribs adjacent to the crown rib across the circumferential main grooves; a total sea ratio N (%) of the crown rib and the middle ribs is greater than 0 and less than 15; the tread portion is composed of a rubber composition including a rubber component, a filler, and a plasticizer; the plasticizer contains a copolymer resin including cyclopentadiene as a monomer component; and when a total amount of the plasticizer per 100 parts by mass of the rubber component in the rubber composition is denoted by P (parts by mass), N/P is less than 3.0.
Although not intended to be bound by a theory, the reason why wet grip performance is improved in the present invention can be considered to be as follows.
Specifically, (1) it is considered that the tread portion has four circumferential main grooves and thus can remove water on a road surface, which contributes to improvement of wet grip performance. (2) Since the crown rib and the pair of middle ribs are provided, and the total value N (%) of the sea ratios of the crown rib and the middle ribs is greater than 0 and less than 15, it is considered that a certain degree of ground-contact area with the road surface can be ensured at the center of a tire ground-contact surface, which contributes to improvement of wet grip performance. (3) The copolymer resin including cyclopentadiene as a monomer component has a cyclopentadiene and/or dicyclopentadiene portion (DCPD portion) having high compatibility with the rubber component and thus is less likely to ooze out from the rubber component. In addition, the copolymer resin including cyclopentadiene as a monomer component is bulky. Therefore, it is considered that when the rubber composition includes the copolymer resin, the rubber composition is imparted with flexibility without impairing a reinforcement effect, which contributes to maintaining the wet grip performance of the tire. (4) Since the N/P is less than 3.0, it is considered that if the content of the plasticizer is increased, the sea ratios of the crown rib and the middle ribs can also be increased, thereby ensuring wet grip performance. Furthermore, it is considered that the above (1) to (4) cooperate to achieve a notable effect of improving wet grip performance.

The N (%) is preferably less than 12 and more preferably less than 9. It is considered that since the N is smaller, the effect of the present invention of improving wet grip performance is more effectively exhibited.

Preferably, the sea ratio $N_c$ (%) of the crown rib is less than 3. It is considered that a certain degree of ground-contact area with the road surface can be ensured at the center of the tire ground-contact surface, and thus wet grip performance is further improved.

Preferably, the sea ratio $N_m$ (%) of the middle ribs is less than 17. Since the sea ratio of the middle ribs is set to be less than 17%, it is considered that a certain degree of ground-contact area with the road surface can also be ensured at each middle rib, and thus wet grip performance is further improved.

Preferably, the tread surface further has a shoulder rib, and a sea ratio $N_S$ (%) of the shoulder rib is greater than 20.

Since the shoulder rib is provided, it is considered that drainage performance can be achieved even in a region close to a tire ground-contact end, and since the sea ratio of the shoulder rib is set to be greater than 20%, it is considered that wet grip performance is further improved.

Preferably, the rubber component contains 90% by mass or more of a butadiene-based rubber.

It is considered that the cyclopentadiene and/or dicyclopentadiene portion (DCPD portion) has particularly high compatibility with SBR or BR, and thus, when 90% by mass or more of the butadiene-based rubber is contained, wet grip performance is further maintained.

Preferably, the filler contains 60% by mass or more of silica.

Since the filler contains silica at a certain ratio or more, it is considered that it is possible to improve flexibility while suppressing the heat generation of the rubber, and thus minute deformation is likely to occur, which contributes to improvement of wet grip performance.

Preferably, the plasticizer contains styrene and a copolymer resin including cyclopentadiene as a monomer component.

Preferably, a ratio (0°C tanδ/N) of tanδ at 0°C (0°C tanδ) of the rubber composition to the N is greater than 0.06.

Since 0°C tanδ/N is set to a certain value or higher, it is considered that energy loss on the tread surface is more easily generated even on a wet road surface, and it is also considered that a crown portion more easily comes into contact with a road surface during rolling of the tire, thereby enabling further improvement of wet grip performance.

Preferably, when a total amount of the copolymer resin including cyclopentadiene as a monomer component, per 100 parts by mass of the rubber component in the rubber composition, is denoted by D (parts by mass), D × N is 80 or more.

Since D × N is a certain value or more, it is considered that even if the content of the copolymer resin including cyclopentadiene as a monomer component is low and it is difficult to achieve compatibility of the DCPD portion with the rubber component, a certain degree of ground-contact area with the road surface can be ensured at the center of the tire ground-contact surface by setting the N to be smaller, so that wet grip performance can be ensured.

Preferably, N/P is less than 1.0. Since N/P becomes smaller, it is considered that the effect of the present invention of improving wet grip performance is more effectively exhibited.

Preferably, the tire according to the present embodiment is for an electric vehicle.

[Definitions]

The "standardized state" is a state where the tire is fitted on a standardized rim and filled with air at a standardized internal pressure and no load is applied to the tire. Unless otherwise specified, the tire is used in the standardized state.

Unless otherwise specified, the "dimensions of each portion of the tire" are values specified in the standardized state, for those appearing on the outer surface of the tire, and are, for example, values specified in a state where the tire is cut along a plane including the tire rotation axis and the cut tire piece is held at the rim width of a standardized rim, for those existing inside the tire or on a tire cross-section.

The "standardized rim" is a rim that is defined, in a standard system including a standard on which the tire is based, by the standard for each tire, and refers to, for example, the standard rim at an applicable size described in "JATMA YEAR BOOK" in the JATMA (The Japan Automobile Tyre Manufacturers Association, Inc.) standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. Reference is made in the order of JATMA, ETRTO, and TRA, and if an applicable size is found at the time of reference, the standard therefor is followed. In the case of a tire that is not specified in the above standards, the "standardized rim" refers to a rim having the smallest rim width among rims having a minimum diameter that allows the rim to be fitted to the tire and allows the internal pressure to be maintained (i.e., no air leakage from between the rim and the tire is caused).

The "standardized internal pressure" is an air pressure that is defined, in a standard system including a standard on which the tire is based, by the standard for each tire, and refers to, for example, the "maximum air pressure" in the JATMA standard, the "INFLATION PRESSURE" in the ETRTO standard, or the maximum value indicated in the table "TIRE LOAD LIMITS AT VARIOUS COLD INFLATION PRESSURES" in the TRA standard. As in the case of the standardized rim, reference is made in the order of JATMA, ETRTO, and TRA, and if an applicable size is found at the time of reference, the standard therefor is followed. In the case of a tire that is not specified in the above standards, the "standardized internal pressure" refers to the standardized internal pressure (but 250 kPa or higher) at another tire size for which the standardized rim is listed as a standard rim (it should be noted that the size is specified in the standard), and if a plurality of standardized internal pressures of 250 kPa or higher are listed, the "standardized internal pressure" refers to the minimum value among them.

The "standardized load (kg)" is a load that is defined, in a standard system including a standard on which the tire is based, by the standard for each tire, and refers to, for example, the "maximum load capacity" in the JATMA standard, the "LOAD CAPACITY" in the ETRTO standard, or the maximum value indicated in the table "TIRE LOAD LIMITS AT VARIOUS COLD INFLATION PRESSURES" in the TRA standard. As in the cases of the standardized rim and the standardized internal pressure, reference is made in the order of JATMA, ETRTO, and TRA, and if an applicable size is found at the time of reference, the standard therefor is followed. In the case of a tire that is not specified in the above standards, a maximum load capacity $W_L$ calculated separately is the standardized load.

The "maximum load capacity $W_L$ (kg)" is calculated using the following calculation formula. "V" denotes the virtual volume of the tire ($mm^3$), "Dt" denotes the tire outer diameter in the standardized state (mm), "Ht" denotes the cross-sectional height of the tire in the tire radial direction in a cross-section of the tire along a plane including the tire rotation axis (mm), and "Wt" denotes the cross-sectional width of the tire in the standardized state (mm). When the rim diameter for the tire is denoted by R, Ht can be obtained by (Dt - R)/2. In the case where there are any patterns, characters, etc., on the tire side surface, Wt is a value obtained by excluding the patterns, characters, etc. The maximum load capacity is synonymous with the standardized load.

[Math. 1]

$$W_L = 0.000011 \times V + 175$$
$$V = \{(Dt/2)^2 - (Dt/2 - Ht)^2\} \times \pi \times Wt$$

The "tread portion" is a member that includes a portion forming the ground-contact surface of the tire. In the case of including a member forming a tire skeleton by steel or a textile material such as a belt layer, a belt reinforcement layer, and a carcass layer in a cross-section in the tire radial direction, the "tread portion" is a member placed outward of these members in the tire radial direction.

In this specification, the "circumferential main groove" is a circumferential groove extending continuously in the tire circumferential direction and having a groove depth of 3.0 mm or more at a deepest part thereof. In this specification, the "four circumferential main grooves" refer to four circumferential main grooves counted from a circumferential main groove having the widest groove width among circumferential main grooves. The circumferential grooves may extend linearly along the circumferential direction or may extend in a wavy, sinusoidal, or zigzag manner.

The "groove width" means the maximum value of the distance between the groove edges of the groove at the tread surface in a direction perpendicular to the direction in which the groove extends.

The "groove depth" refers to a linear distance between a straight line connecting end portions of the groove at the tread surface and a lowest part in the tire radial direction of the groove in a cross-section of the tire along a plane including the tire rotation axis. If the groove depth of the groove varies in the tire width direction and/or circumferential direction, the maximum value of the linear distance is regarded as the groove depth of the groove.

The "land portion" is a portion of the tread that comes into contact with the ground when the tire is pressed against the ground and is a portion of the tread that constitutes an effective ground-contact region described later.

The "rib" is a region of the land portion that is demarcated by a tire ground-contact end or a circumferential main groove and in which no specific lateral groove is formed. In the case of a rib that is demarcated by two circumferential main grooves, the "specific lateral groove" is a lateral groove that communicates with both of the circumferential main grooves adjacent thereto and has a groove depth of 3.0 mm or more at a deepest part thereof. In the case of a rib demarcated by a tire ground-contact end and a circumferential main groove, the "specific lateral groove" is a lateral groove that communicates with the circumferential main groove from the tire ground-contact end and has a groove depth of 3.0 mm or more at a deepest part thereof. A region of the land portion that has the "specific lateral groove" is referred to as block.

The "crown rib" refers to a rib that is located on the tire equator in the case where there is no circumferential main groove on the tire equator. In the case where there is a circumferential main groove on the tire equator, the "crown rib" is a rib adjacent to the circumferential main groove in the tire width direction, and if there are two ribs adjacent thereto, both are crown ribs.

The "middle rib" is a rib that is adjacent to the outer side in the tire width direction with respect to a circumferential main groove that is adjacent to the outer side in the tire width direction of the crown rib. An outer end in the tire width direction of the middle rib may be a ground-contact end, or there may be another rib (e.g., a shoulder rib described later) on the outer side in the tire width direction with respect to the outer end in the tire width direction of the middle rib.

The "shoulder rib" is a rib that is adjacent to the outer side in the tire width direction with respect to a circumferential main groove that is adjacent to the outer side in the tire width direction of the middle rib. An outer end in the tire width direction of the shoulder rib may be a ground-contact end, or there may be another rib on the outer side in the tire width direction with respect to the outer end in the tire width direction of the shoulder rib.

The "ground-contact region" is a region of the tread that is obtained from a contour when the tire is pressed against the ground, and is obtained by fitting the tire onto the standardized rim, inflating the tire to the standardized internal pressure, allowing the tire to stand at 25°C for 24 hours, then applying black ink to the tread surface of the tire, and applying the standardized load (load equal to the maximum load capacity) to the tire to press the tire perpendicularly against a thick piece of paper (with the camber angle set to 0°) to transfer the ink to the thick piece of paper. The ground-contact region is measured for each rib. The area of the ground-contact region of each rib is referred to as gross ground-contact area of each rib.

The "effective ground-contact region" is a region of the tread in which the tire comes into contact with the ground when the tire is pressed against the ground, and is obtained by fitting the tire onto the standardized rim, inflating the tire to the standardized internal pressure, allowing the tire to stand at 25°C for 24 hours, then applying black ink to the tread surface of the tire, and applying the standardized load (load equal to the maximum load capacity) to the tire to press the tire against a thick piece of paper (with the camber angle set to 0°) to transfer the ink to the thick piece of paper. The effective ground-contact region is measured for each rib. The area of the effective ground-contact region of each rib is referred to as effective ground-contact area of each rib.

The "total sea ratio N (%) of the crown rib and the middle rib" is calculated using the following formula.

N (%) = {1 - (total effective ground-contact area of crown rib and middle rib/total gross ground-contact area of crown rib and middle rib)} x 100 When there are two crown ribs, the total effective ground-contact area and the total gross ground-contact area are the total areas of the two crown ribs and two middle ribs.

The "sea ratio $N_c$ (%) of the crown rib" is calculated using the following formula.

$N_c$ (%) = {1 - (total effective ground-contact area of crown rib/total gross ground-contact area of crown rib)} $\times$ 100

When there are two crown ribs, the total effective ground-contact area and the total gross ground-contact area are the total areas of the two crown ribs.

The "sea ratio $N_m$ (%) of the middle rib" is calculated using the following formula.

$N_m$ (%) = {1 -(total effective ground-contact area of middle rib/total gross ground-contact area of middle rib)} $\times$ 100

The "sea ratio $N_S$ (%) of the shoulder rib" is calculated using the following formula.

$N_s$ (%) = {1 - (total effective ground-contact area of shoulder rib/total gross ground-contact area of shoulder rib)} $\times$ 100

When there are two shoulder ribs, the total effective ground-contact area and the total gross ground-contact area are the total areas of the two shoulder ribs.

The "ground-contact width TW" is the maximum width of the ground-contact region in the tire width direction. As for TW, a ground-contact region is traced by fitting the tire onto the standardized rim, inflating the tire to the standardized internal pressure, allowing the tire to stand at 25°C for 24 hours, then applying black ink to the tread surface of the tire, and applying the standardized load (load equal to the maximum load capacity) to the tire to press the tire against a thick piece of paper (with the camber angle set to 0°) to transfer the ink to the thick piece of paper, so that TW is obtained as the maximum width in the tire width direction from the ground-contact region obtained thus. However, the same transfer operation is performed at a total of five locations with the tire being rotated in steps of 72 degrees, and the average value of the five maximum values obtained thus is regarded as TW.

The "plasticizer" is a material that imparts plasticity to the rubber component and is a component extracted from the rubber composition using acetone. In addition, the plasticizer includes a plasticizer that is liquid (in liquid form) at 25°C and a plasticizer that is solid at 25°C. However, the plasticizer does not include waxes and stearic acid that are commonly used in the tire industry.

The "total amount P of the plasticizer per 100 parts by mass of the rubber component" also includes the amount of a plasticizer in the rubber component extended by the plasticizer.

The "loss tangent of the rubber composition" is a loss tangent (tan$\delta$) measured under each condition in tensile mode using a dynamic viscoelasticity measuring device (e.g., EPLEXOR series, manufactured by NETZSCH-Gerätebau GmbH). A sample used for dynamic viscoelasticity measurement is a vulcanized rubber composition with dimensions of 20 mm in length, 4 mm in width, and 1 mm in thickness. When creating a sample by cutting the sample from the tire, if the member from which the sample is created is the tread portion, a belt layer, or an inner liner, the length direction of the sample is made to coincide with the tire circumferential direction, and the thickness direction of the sample is made to coincide with the tire radial direction. If the member from which the sample is created is a sidewall, a clinch, a bead apex, or a side reinforcing layer, the length direction of the sample is made to coincide with a tangential direction relative to the tire circumference, and the thickness direction of the sample is made to coincide with the tire width direction.

The "0°C tan$\delta$" is a loss tangent (tan $\delta$) measured under the conditions of a temperature of 0°C, a frequency of 10 Hz, an initial strain of 10%, a dynamic strain of $\pm2.5\%$, and tensile mode.

The "rubber component of the rubber composition" is a component that contributes to crosslinking in the rubber composition and generally has a weight-average molecular weight (Mw) of 10 thousand or more.

The "glass transition temperature of the rubber component" is the static glass transition temperature of each rubber component obtained using a differential scanning calorimeter (e.g., Q200, manufactured by TAI Instruments Japan Inc.).

The "styrene content" is calculated using thermal decomposition gas chromatography or NMR measurement ($^1$H-NMR or $^{13}$C-NMR). Unlike physical properties such as a complex elastic modulus (E*), a component content such as "styrene content" has a true value independent of a measurement method, and thus it is preferable to use a measurement method with as high accuracy as possible. In this specification, "thermal decomposition gas chromatography" refers to a method in which a sample is heated by a thermal decomposition apparatus, the individual components contained in the gas phase generated by this heating are separated by a separation column, and each isolated component is analyzed.

The "vinyl content (1,2-bond butadiene unit content)" is calculated using thermal decomposition gas chromatography or NMR measurement ($^1$H-NMR or $^{13}$C-NMR). Like the "styrene content", the "vinyl content" has a true value independent of a measurement method, and thus it is preferable to use a measurement method with as high accuracy as possible.

The "cis content (cis-1,4-bond butadiene unit content)" is a value measured using infrared absorption spectroscopy or NMR measurement ($^1$H-NMR or $^{13}$C-NMR) in accordance with JIS K 6239-2: 2017 and is applicable to a rubber component having repeating units derived from butadiene such as BR. Like the "styrene content", the "cis content" has a true value independent of a measurement method, and thus it is preferable to use a measurement method with as high accuracy as possible.

The "weight-average molecular weight (Mw)" can be obtained by conversion, based on a polystyrene standard, of a value measured by gel permeation chromatography (GPC) (e.g., GPC-8000 series manufactured by Tosoh Corporation, detector: differential refractometer, column: TSKgel SuperMultipore HZ-M). For example, the "weight-average molecular weight (Mw)" is applicable to SBR, BR, the plasticizer, etc.

The "nitrogen adsorption specific surface area ($N_2$SA) of carbon black" is measured in accordance with JIS K 6217-2: 2017.

The "nitrogen adsorption specific surface area ($N_2$SA) of silica" is measured by the BET method in accordance with ASTM D3037-93.

The "average primary particle diameter" is a value obtained by photographing particles using a transmission or scanning electron microscope and calculating the arithmetic mean of the particle diameters of 400 particles. In the case where the particle shape is spherical, the diameter of the sphere is used as the particle diameter. If the particle shape is non-spherical, a circle equivalent diameter (a positive square root of {4 $\times$ (particle area)/$\pi$}) is calculated from a microscope image and used as the particle diameter.

The "softening point of a resin" is a softening point that is measured with a ring and ball softening point measuring device in accordance with 7.7 of JIS K 6220-1: 2015 and that is a temperature at which a ball has descended.

[Tire]

Hereinafter, a tire according to an embodiment of the present invention will be described with reference to the drawing. The tire according to the present embodiment is a tire having a tread portion, wherein a tread surface of the tread portion has four circumferential main grooves, a crown rib demarcated by the circumferential main grooves, and a pair of middle ribs adjacent to the crown rib across the circumferential main grooves, a total value N (%) of sea ratios of the crown rib and the middle ribs is greater than 0 and less than 15, and when a total amount of a plasticizer per 100 parts by mass of a rubber component in a rubber composition constituting the tread portion is denoted by P (parts by mass), N/P is less than 3.0. The following embodiment is merely an example, and the tire according to the present embodiment is not limited to the following embodiment.

FIG. 1 schematically illustrates a tread pattern of a tire according to an embodiment of the present invention. In FIG. 1, W indicates the tire width direction, C indicates the tire circumferential direction, and TW indicates the tire ground-contact width.

The tread surface of the tire according to the present embodiment has four circumferential main grooves. In FIG. 1, as for the groove widths of the four circumferential main grooves 2, two circumferential main grooves closer to a tire equator CL are wider, and a pair of circumferential main grooves closer to tire ground-contact ends are narrower. However, the groove widths of the four circumferential main grooves 2 are not limited to this and may be all the same.

In FIG. 1, there is no circumferential main groove on the tire equator CL, and a crown rib 3 is located on the tire equator CL. The crown rib 3 is provided with a plurality of lateral grooves 7d each having a component in the tire width direction and having a groove depth of less than 3.0 mm at a deepest part thereof. Each lateral groove 7d is open at one end thereof to the circumferential main groove and terminates at another end thereof within the crown rib. The crown rib according to the present embodiment is not limited to this, and it is preferable that the crown rib has lateral grooves.

The sea ratio $N_c$ of the crown rib is preferably less than 8%, more preferably less than 5%, and further preferably less than 3% from the viewpoint of wet grip performance. The $N_c$ may be 0% but is preferably greater than 1%.

The sea ratio $N_m$ of the middle ribs is preferably less than 17%, more preferably less than 15%, further preferably less than 10%, and particularly preferably less than 8% from the viewpoint of ensuring a certain degree of ground-contact area with a road surface at each middle rib and improving wet grip performance. In addition, the sea ratio $N_m$ of the middle ribs is preferably greater than 2% and more preferably greater than 3%.

A pair of middle ribs 4 are each adjacent to the crown rib 3 across the circumferential main groove 2. In FIG. 1, each middle rib 4 is provided with lateral grooves 7c. The groove depth at a deepest part of each lateral groove 7c is less than 3.0 mm. From the viewpoint of wet grip performance, it is preferable that each middle rib 4 according to the present embodiment has lateral grooves. In FIG. 1, each lateral groove 7c communicates with the circumferential main grooves, but the lateral grooves of the middle ribs are not limited to this and may each be a closed lateral groove that terminates within the middle rib.

The total value N of the sea ratios of the crown rib and the middle ribs is greater than 0%, preferably greater than 2%, more preferably greater than 5%, and further preferably greater than 7%. Furthermore, the total value N of the sea ratios of the crown rib and the middle ribs is less than 15%, preferably less than 14%, more preferably less than 12%, further preferably less than 10%, and particularly preferably less than 9%. N is equal to the sum of $N_C$ and $N_m$.

The tread surface in FIG. 1 has one shoulder rib 5. It is preferable that the tread surface according to the present embodiment has a shoulder rib. In FIG. 1, the shoulder rib 5 is provided with lateral grooves 7e each having a groove depth of less than 3.0 mm at a deepest part thereof. In the case where the tread surface according to the present embodiment has a shoulder rib, from the viewpoint of wet grip performance, it is preferable that the shoulder rib has lateral grooves. In FIG. 1, each lateral groove 7e communicates with the circumferential main groove 2 and the tire ground-contact end but is not limited to such a configuration and may be a closed lateral groove that does not communicate with the circumferential main groove and/or the tire ground-contact end and terminates within the shoulder rib. In the case where the tread surface according to the present embodiment has a shoulder rib, from the viewpoint of wet grip performance, it is preferable that each lateral groove of the shoulder rib is open to the tire ground-contact end.

The sea ratio $N_S$ of the shoulder rib is preferably greater than 10%, more preferably greater than 15%, further preferably greater than 20%, and particularly preferably greater than 22% from the viewpoint of wet grip performance. In addition, the sea ratio $N_S$ of the shoulder rib is preferably less than 40%, more preferably less than 35%, and further preferably less than 30% from the viewpoint of wear resistance.

In FIG. 1, the tread surface has a plurality of lateral grooves 7a each communicating with the circumferential main groove from the tire ground-contact end and having a groove depth of 3.0 mm or more at a deepest part thereof, and a plurality of shoulder blocks 6 demarcated by the lateral grooves 7a. In FIG. 1, each shoulder block 6 has lateral grooves 7b communicating with the circumferential main groove 2 and not communicating with the tire ground-contact end but is not limited to such a configuration.

The tanδ at 0°C (0°C tanδ) of the rubber composition constituting the tread portion according to the present embodiment is preferably 0.50 or more, more preferably 0.55 or more, and further preferably 0.60 or more. In addition, 0°C tanδ is preferably 0.80 or less, more preferably 0.75 or less, and further preferably 0.70 or less.

The tanδ of the rubber composition can be adjusted as appropriate based on the types and blending amounts of a rubber component, a filler, a plasticizer, etc., described later. For example, 0°C tanδ can be increased by increasing the content of the plasticizer in the rubber composition.

The ratio (0°C tanδ/N) of 0°C tanδ to N is preferably greater than 0.04, more preferably greater than 0.06, and further preferably greater than 0.08. In addition, 0°C tanδ/N is preferably less than 0.20, more preferably less than 0.18, further preferably less than 0.15, and particularly preferably less than 0.10.

When the total amount of the plasticizer per 100 parts by mass of the rubber component in the rubber composition constituting the tread portion according to the present embodiment is denoted by P (parts by mass), N/P is less than 3.0, preferably less than 2.0, more preferably less than 1.0, and further preferably less than 0.50. In addition, N/P is preferably greater than 0.05 and more preferably greater than 0.10. P will be described later.

When the total amount of a copolymer resin including cyclopentadiene as a monomer component, per 100 parts by mass of the rubber component in the rubber composition constituting the tread portion according to the present embodiment, is denoted by D (parts by mass), D × N is preferably 80 or more, more preferably 100 or more, and further preferably 140 or more. In addition, D × N is preferably 300 or less, more preferably 280 or less, and further preferably 250 or less. D will be described later.

[Rubber Composition]

The rubber composition constituting the tread portion according to the present embodiment will be described below. The rubber composition according to the present embodiment includes a rubber component, a filler, and a plasticizer, and contains a copolymer resin including cyclopentadiene as a monomer component, as the plasticizer.

<Rubber Component>

The rubber composition according to the present embodiment preferably contains a diene-based rubber as the rubber component, and more preferably contains a butadiene-based rubber among diene-based rubbers.

As the diene-based rubber, any diene-based rubber that is commonly used in the tire industry is suitable for use. Specific examples of the diene-based rubber include isoprene-based rubbers, butadiene-based rubbers, styrene-isoprene rubber (SIR), and chloroprene rubber (CR). One of these diene-based rubbers may be used alone, or two or more of these diene-based rubbers may be used in combination.

A butadiene-based rubber is a rubber component composed of a polymer including butadiene as a polymer unit. Examples of butadiene-based rubbers include styrene-butadiene rubber (SBR), butadiene rubber (BR), butadiene-isoprene copolymer rubber, acrylonitrile-butadiene rubber (NBR), and styrene-isoprene-butadiene rubber (SIBR). One of these butadiene-based rubbers may be used alone, or two or more of these butadiene-based rubbers may be used in combination. The rubber component according to the present embodiment preferably includes BR or SBR, and it is more preferable to use BR and SBR in combination. The rubber component may also be composed only of BR and SBR.

The rubber composition according to the present embodiment preferably contains BR and SBR as the diene-based rubber, and may contain BR, SBR, and an isoprene-based rubber, or may be composed only of BR, SBR, and an isoprene-based rubber.

(SBR)

The SBR is not particularly limited, and examples of the SBR include solution-polymerized SBRs (S-SBRs), emulsion-polymerized SBRs (E-SBRs), and modified SBRs thereof (modified S-SBRs and modified E-SBRs). Examples of the modified SBRs include an SBR whose terminals and/or main chain is modified, and a modified SBR (a condensate, one having a branch structure, etc.) coupled with tin, a silicon compound, or the like. Furthermore, hydrogenated products of these SBRs (hydrogenated SBRs), etc., may also be used. One of these SBRs may be used alone, or two or more of these SBRs may be used in combination.

As the SBR, an oil-extended SBR can also be used, or a non-oil-extended SBR can also be used. In this specification, as the SBR, products commercially available from JSR Corporation, SUMITOMO CHEMICAL COMPANY, LIMITED, Ube Corporation, Asahi Kasei Corporation, ZS Elastomer Co., Ltd., ARLANXEO, etc., can be used.

The styrene content of the SBR is preferably greater than 10% by mass, more preferably greater than 15% by mass, and further preferably greater than 20% by mass from the viewpoint of compatibility with the copolymer resin including cyclopentadiene as a monomer component. Meanwhile, the styrene content of the SBR is preferably less than 55% by mass, more preferably less than 50% by mass, and further preferably less than 45% by mass. If the styrene content of the SBR exceeds 55% by mass, styrene groups become adjacent to each other, the polymer becomes excessively hard, and non-uniform crosslinking is likely to occur, resulting in significant changes in performance with respect to temperature changes, so that there is a tendency to fail to achieve stable and good grip performance. The styrene content of the SBR is measured by the above measurement method.

The vinyl content of the SBR is preferably greater than 10% by mole, more preferably greater than 15% by mole, and further preferably greater than 18% by mole. In addition, the vinyl content of the SBR is preferably less than 70% by mole, more preferably less than 65% by mole, and further preferably less than 60 % by mole. In this specification, the vinyl content of the SBR is measured by the above measurement method.

The glass transition temperature (Tg) of the SBR is preferably -80°C or higher, more preferably -70°C or higher, and further preferably -65°C or higher from the viewpoint of wet grip performance. In addition, the Tg of the SBR is preferably -55°C or lower from the viewpoint of low fuel consumption performance. The Tg of the SBR is measured by the above measurement method.

The weight-average molecular weight (Mw) of the SBR is preferably greater than 200 thousand, more preferably greater than 300 thousand, further preferably greater than 400 thousand, and particularly preferably greater than 500 thousand. In addition, the Mw is preferably less than 2 million, more preferably less than 1.5 million, and further preferably less than 1 million from the viewpoint of crosslink uniformity, etc. The Mw of the SBR is measured by the above measurement method.

The content of the SBR in the rubber component is preferably greater than 40% by mass, more preferably greater than 50% by mass, further preferably greater than 60% by mass, and particularly preferably greater than 70% by mass from the viewpoint of compatibility with a copolymer resin including cyclopentadiene as a monomer component. In addition, the content of the SBR in the rubber component is preferably less than 90% by mass and more preferably less than 85% by mass.

(BR)

The BR is not particularly limited, and, for example, BRs that are generally used in the tire industry, such as a BR having a cis content of less than 50% by mole (low-cis BR), a BR having a cis content of 90% by mole or more (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (modified high-cis BR, modified low-cis BR), can be used. One of these BRs may be used alone, or two or more of these BRs may be used in combination.

As the high-cis BR, for example, products commercially available from Zeon Corporation, Ube Corporation, JSR Corporation, etc., can be used. By containing the high-cis BR, low-temperature characteristics and wear resistance can be improved. The cis content of the high-cis BR is preferably greater than 95% by mole, more preferably greater than 96% by mole, and further preferably greater than 97% by mole. The cis content of the BR is measured by the above measurement method.

The rare-earth element-based BR is synthesized using a rare earth element-based catalyst, and the vinyl content of the rare-earth element-based BR is preferably less than 1.8% by mole, more preferably less than 1.6% by mole, and further preferably 1.5% by mole or less, and the cis content of the rare-earth element-based BR is preferably greater than 95% by mole, more preferably greater than 96% by mole, and further preferably 97% by mole or more. As the rare-earth element-based BR, for example, products commercially available from LANXESS, etc., can be used.

An example of the SPB-containing BR is not a BR in which 1,2-syndiotactic polybutadiene crystals are merely dispersed, but a BR in which 1,2-syndiotactic polybutadiene crystals are dispersed in a state of being chemically bound to the BR. As such an SPB-containing BR, products commercially available from Ube Corporation, etc., can be used.

Examples of the modified BRs include BRs modified with the same functional groups as described above for the SBR, etc., and modified butadiene rubbers (modified BRs) whose terminals and/or main chains are modified with functional groups including at least one element selected from the group consisting of silicon, nitrogen, and oxygen, are suitable for use.

Examples of other modified BRs include a BR that is obtained by polymerizing 1,3-butadiene with a lithium initiator and then adding a tin compound to the polymerized 1,3-butadiene and in which the terminals of the modified BR molecules are bound to each other through tin-carbon bonds (tin-modified BR). In addition, the modified BR may be either hydrogenated or non-hydrogenated.

The weight-average molecular weight (Mw) of the BR is preferably greater than 300 thousand, more preferably greater than 350 thousand, and further preferably greater than 400 thousand from the viewpoint of wear resistance. In addition, the Mw of the BR is preferably less than 2 million, more preferably less than 1 million, and further preferably less than 500 thousand from the viewpoint of crosslink uniformity, etc. The Mw of the BR can be obtained by the above method.

The content of the BR in the rubber component is preferably 5% by mass or more, more preferably 10% by mass or more, and further preferably 15% by mass or more. In addition, the content of the BR in the rubber component is preferably 50% by mass or less, more preferably 40% by mass or less, and further preferably 30% by mass or less.

The content of the butadiene-based rubber in the rubber component is preferably greater than 50% by mass, more preferably 60% by mass or more, further preferably 70% by mass or more, even more preferably 80% by mass or more, and particularly preferably 90% by mass or more, and may be 100% by mass.

In the case of containing a diene-based rubber other than a butadiene-based rubber as the rubber component, it is preferable to include an isoprene-based rubber.

(Isoprene-Based Rubber)

As the isoprene-based rubber, for example, rubbers that are generally used in the tire industry, such as isoprene rubber (IR) and natural rubber, can be used. Examples of the natural rubber include unmodified natural rubber (NR) as well as modified natural rubbers such as epoxidized natural rubber (ENR), hydrogenated natural rubber (HNR), deproteinized natural rubber (DPNR), ultra-pure natural rubber, and grafted natural rubber. One of these isoprene-based rubbers may be used alone, or two or more of these isoprene-based rubbers may be used in combination.

The NR is not particularly limited, NRs that are generally used in the tire industry can be used, and examples of the NR include SIR20, RSS#3, and TSR20.

In the case of containing an isoprene-based rubber, the content of the isoprene-based rubber in the rubber component is preferably greater than 5% by mass, more preferably greater than 10% by mass, and further preferably greater than 20% by mass. In addition, the content of the isoprene-based rubber in the rubber component is preferably less than 60% by mass and more preferably less than 50% by mass.

(Other Rubber Components)

The rubber component may contain rubber components other than diene-based rubbers (non-diene-based rubbers) as long as the effects of the invention are not affected. As the non-diene-based rubbers, rubber components that are generally used in the tire industry can be used, and examples of the non-diene-based rubbers include butyl-based rubbers, ethylenepropylene rubber, polynorbornene rubber, silicone rubber, chlorinated polyethylene rubber, fluororubber (FKM), acrylic rubber (ACM), and hydrin rubber. One of these other rubber components may be used alone, or two or more of these other rubber components may be used in combination. In addition to the above rubber component, a known thermoplastic elastomer may be contained or may not necessarily be contained.

(Rubber Components Synthesized from Recycled or Biomass-Derived Raw Materials)

The monomers that are structural units of synthetic rubbers such as IR, SBR, and BR may be derived from underground resources such as petroleum or natural gas or may be recycled from rubber products such as tires or non-rubber products such as polystyrene. Monomers (recycled monomers) obtained through recycling are not particularly limited and examples thereof include recycled polyisoprene, recycled butadiene, and recycled aromatic vinyl compounds. Examples of the above butadiene include 1,2-butadiene and 1,3-butadiene. The above aromatic vinyl compounds are not particularly limited, and examples thereof include styrene. Among these, it is preferable to use recycled polyisoprene, recycled butadiene, and/or recycled styrene as raw materials.

A method for producing recycled monomers is not particularly limited, and examples thereof include synthesis from recycled naphtha obtained by decomposing rubber products such as tires. A method for producing recycled naphtha is not particularly limited, and rubber products such as tires may be decomposed under high temperature and high pressure or may be decomposed by microwave, or extraction may be performed after mechanical crushing.

Furthermore, the monomers that are structural units of polymers such as IR, SBR, and BR may be derived from biomass. In this specification, biomass refers to substances derived from natural resources such as plants. Biomass is not particularly limited, and examples thereof include agricultural, forestry, and fishery products, sugars, wood chips, plant residues after extraction of useful components, plant-derived ethanol, and biomass naphtha.

Biomass-derived monomers (biomass monomers) are not particularly limited, and examples thereof include biomass-derived butadiene and biomass-derived aromatic vinyl compounds. Examples of the above butadiene include 1,2-butadiene and 1,3-butadiene. The above aromatic vinyl compounds are not particularly limited, and examples thereof include styrene. A method for producing biomass monomers is not particularly limited and examples thereof include biological and/or chemical and/or physical conversion of plants and animals. Biological conversion is typically fermentation by microorganisms, and examples of chemical and/or physical conversion include conversion by catalysts, high heat, high pressure, electromagnetic waves, and critical fluids, and combinations thereof.

The polymers (biomass polymers) synthesized from biomass monomer components are not particularly limited, and examples thereof include polybutadiene rubbers synthesized from biomass-derived butadiene, and aromatic vinyl/butadiene copolymers synthesized from biomass-derived butadiene and/or biomass-derived aromatic vinyl compounds. Examples of the aromatic vinyl/butadiene copolymers include styrene-butadiene rubbers synthesized from biomass-derived butadiene and/or biomass-derived styrene.

Whether the raw material for the polymer is derived from biomass can be determined by measuring pMC (percent Modern Carbon) in accordance with ASTM D6866-10. pMC is the ratio of the $^{14}C$ concentration of a sample to the $^{14}C$ concentration of a standard modern carbon (modern standard reference) and is a value used as an indicator of the biomass ratio of the compound. The significance of this value will be described below.

One mole of carbon atoms ($6.02 \times 10^{23}$ atoms) contains approximately $6.02 \times 10^{11}$ $^{14}C$ atoms, which is about one trillionth of the number of normal carbon atoms. The half-life of $^{14}C$ is 5,730 years, and $^{14}C$ decreases regularly. Therefore, in fossil fuels such as coal, petroleum, and natural gas, which are believed to have been formed more than 226,000 years ago after carbon dioxide and other substances in the atmosphere were absorbed and fixed by plants, etc., all of the $^{14}C$ elements that were originally contained at the time of fixation have decayed. Thus, at the present which is the 21st century, fossil fuels such as coal, petroleum, and natural gas contain no $^{14}C$ elements at all. Therefore, chemical substances produced from these fossil fuels as raw materials also contain no $^{14}C$ at all.

Meanwhile, $^{14}C$ is continuously generated by cosmic rays undergoing nuclear reactions in the atmosphere. Therefore, the amount of $^{14}C$ in the Earth's atmospheric environment remains constant due to the balance between its decrease through radioactive decay and its generation through nuclear reactions. Therefore, the $^{14}C$ concentration of substances derived from biomass resources circulating in the current environment is approximately $1 \times 10^{-12}\%$ by mole of the total carbon atoms, as described above. Therefore, the difference between these values can be used to calculate the biomass ratio in a compound.

This $^{14}C$ is generally measured as follows. Using accelerator mass spectrometry based on a tandem accelerator, the concentrations of $^{13}C$ ($^{13}C/^{12}C$) and $^{14}C$ ($^{14}C/^{12}C$) are measured. In the measurement, the $^{14}C$ concentration in the circulating carbon in the natural environment at the time of 1950 is adopted as the modern standard reference for the $^{14}C$ concentration. As a specific standard material, the oxalic acid standard provided by the National Institute of Standards and Technology (NIST) is used. The specific radioactivity of carbon (the radioactivity intensity of $^{14}C$ per 1 g of carbon) in the oxalic acid is separated for each carbon isotope, corrected to a certain value for $^{13}C$, and the value obtained after applying decay correction from 1950 to the measurement date is used as a standard $^{14}C$ concentration value (100%). The ratio of this value to the value measured in the actual sample is a pMC value.

Therefore, if a rubber is produced from 100% biomass-derived materials, although there may be regional differences, etc., the pMC value currently does not reach 100 under normal conditions in many cases and thus indicates approximately 110 pMC. Meanwhile, when the $^{14}C$ concentration of a chemical substance derived from fossil fuels such as petroleum is measured, the pMC value indicates approximately 0 pMC (e.g., 0.3 pMC). This value corresponds to the biomass ratio of 0% described above.

Based on the above, using a material such as rubber with high pMC values, that is, a material such as rubber with high biomass ratios, in a rubber composition is environmentally suitable.

[Filler]

The rubber composition according to the present embodiment contains a filler, and preferably contains silica, and more preferably contains carbon black and silica, as the filler. **In** addition, the filler may be a filler composed only of carbon black and silica.

<Silica>

The silica is not particularly limited, and for example, silicas that are generally used in the tire industry, such as a silica prepared by a dry process (anhydrous silica) and a silica prepared by a wet process (hydrous silica), can be used. The raw material for the silica is not particularly limited and may be a mineral-derived raw material such as quartz or may be a biologically-derived raw material (e.g., a silica derived from biomass materials such as rice husks, etc.), and a silica recycled from silica-containing products may be used. Among them, a hydrous silica prepared by a wet process is preferable because of a high silanol group content thereof. One of these silicas may be used alone, or two or more of these silicas may be used in combination.

Silica made from biomass materials can be produced, for example, by: extracting silicates from rice husk ash obtained by burning rice husks, using a sodium hydroxide solution; reacting the silicates with sulfuric acid in the same manner as conventional wet-processed silica to produce a silicon dioxide precipitate; and then filtering, washing with water, drying, and crushing the precipitate.

As silica recycled from silica-containing products, for example, silica recovered from products containing silica such as electronic components (e.g., semiconductors), tires, desiccants, and filter materials such as diatomaceous earth can be used. A method of the recovery is not particularly limited, and examples thereof include thermal decomposition and decomposition by electromagnetic waves. Among them, silica recovered from electronic components such as semiconductors or tires is preferable.

When silica crystallizes, the silica does not dissolve in water, so that silicic acid, which is a component thereof, cannot be used. By controlling combustion temperature and time, crystallization of silica in rice husk ash can be suppressed (see Japanese Laid-Open Patent Publication No. 2009-2594, Akita Prefectural University Web Journal B/2019, Vol. 6, pp. 216-222, etc.). As amorphous silica extracted from rice husks, products commercially available from Wilmar International Limited, etc., can be used.

The nitrogen adsorption specific surface area ($N_2SA$) of the silica is preferably greater than 100 $m^2/g$, more

preferably greater than 150 m²/g, and further preferably greater than 170 m²/g from the viewpoint of reinforcing properties. In addition, the $N_2SA$ of the silica is preferably less than 250 m²/g, more preferably less than 200 m²/g, and further preferably less than 180 m²/g from the viewpoint of heat generation properties and processability. The $N_2SA$ of the silica is measured by the above measurement method.

The average primary particle diameter of the silica is preferably greater than 10 nm, more preferably greater than 12 nm, and further preferably greater than 15 nm from the viewpoint of reinforcing properties. In addition, the average primary particle diameter is preferably less than 25 nm and more preferably less than 20 nm. The average primary particle diameter of the silica is measured by the above measurement method.

The content of the silica in the filler is preferably 50% by mass or more, more preferably 60% by mass or more, further preferably 70% by mass or more, even further preferably 80% by mass or more, and particularly preferably 90% by mass or more. In addition, the content of the silica in the filler is preferably 95% by mass or less. However, the content of the silica in the filler may be 100% by mass.

The content of the silica per 100 parts by mass of the rubber component is preferably greater than 30 parts by mass, more preferably greater than 40 parts by mass, and further preferably 50 parts by mass or more from the viewpoint of wet grip performance. In addition, the content of the silica per 100 parts by mass of the rubber component is preferably less than 120 parts by mass, more preferably less than 100 parts by mass, and further preferably less than 80 parts by mass.

<Silane Coupling Agent>

The silica is preferably used in combination with a silane coupling agent. The silane coupling agent is not particularly limited, and examples of the silane coupling agent include: sulfide-based silane coupling agents such as bis(3-triethoxysilylpropyl)disulfide and bis(3-triethoxysilylpropyl)tetrasulfide; mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among these silane coupling agents, it is preferable to contain a sulfide-based silane coupling agent and/or a mercapto-based silane coupling agent. As the silane coupling agent, for example, products commercially available from Evonik Degussa GmbH, Momentive Performance Materials, Inc., etc., can be used. One of these silane coupling agents may be used alone, or two or more of these silane coupling agents may be used in combination.

The content of the silane coupling agent per 100 parts by mass of the silica is preferably greater than 5 parts by mass and more preferably greater than 7 parts by mass from the viewpoint of enhancing the dispersibility of the silica. In addition, the content of the silane coupling agent is preferably less than 15 parts by mass, more preferably less than 10 parts by mass, and further preferably less than 9 parts by mass from the viewpoint of cost and processability.

The content of the silane coupling agent (in the case where a plurality of silane coupling agents are used in combination, the total content thereof) per 100 parts by mass of the rubber component is preferably greater than 2 parts by mass, more preferably greater than 3 parts by mass, and further preferably greater than 5 parts by mass from the viewpoint of enhancing the dispersibility of the silica. In addition, the content of the silane coupling agent is preferably less than 12 parts by mass, more preferably less than 10 parts by mass, and further preferably less than 8 parts by mass from the viewpoint of preventing a decrease in wear resistance.

<Carbon Black>

The carbon black is not particularly limited, and examples of the carbon black include N134, N110, N220, N234, N219, N339, N330, N326, N351, N550, and N762. The raw material for the carbon black may be a biomass material such as lignin and plant oil or may be pyrolysis oil obtained by thermal decomposition of waste tires. A method for producing the carbon black may be a method by combustion such as a furnace method, may be a method by hydrothermal carbonization (HTC), or may be a method by thermal decomposition of methane such as a thermal black method. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbian Carbon Co., etc., can be used. One of these carbon blacks may be used alone, or two or more of these carbon blacks may be used in combination.

In addition to the above, carbon black made from biomass materials such as lignin, or recycled carbon black obtained by thermal decomposition of products containing carbon black, such as tires, and purification may be used from the viewpoint of life cycle assessment.

In this specification, the "recycled carbon black" refers to carbon black that is obtained by crushing used tires or other products including carbon black, and calcining the crushed material, and for which, when oxidatively combusted by heating in air using a thermal gravimetric analysis method that complies with JIS K 6226-2: 2003, the proportion of the mass of ash (ash content) which is a non-combustible component is 13% by mass or more. That is, the proportion of the mass (carbon content) that is the weight loss due to the oxidation combustion of the recycled carbon black is 87% by mass or less. The recycled carbon black is sometimes denoted as rCB.

The recycled carbon black can be obtained from a thermal decomposition process of used pneumatic tires. For example, the specification of European Patent Application Publication No. 3427975 mentions "Rubber Chemistry and Technology", Vol. 85, No. 3, pp. 408-449 (2012), particularly pp. 438, 440, and 442, and states that recycled carbon black is obtained by thermal decomposition of organic materials at 550 to 800°C in an oxygen-free atmosphere, or by vacuum thermal decomposition at relatively low temperatures ([0027]). The carbon black obtained from such a thermal decomposition process, as mentioned in [0004] of Japanese Patent No. 6856781, normally lacks functional groups on the surface thereof (Comparison of surface morphology and chemistry between pyrolytic carbon black and commercially available carbon black, Powder Technology 160 (2005) 190-193).

The recycled carbon black may be carbon black that lacks functional groups on the surface thereof or may be carbon black that is treated to include a functional group on the surface thereof. The treatment to be performed to include a functional group on the surface of recycled carbon black can be carried out by a normal method. For example, in the specification of European Patent Application Publication No. 3173251, carbon black obtained from a thermal decomposition process is treated with potassium permanganate under acidic conditions to obtain carbon black including a hydroxyl and/or carboxyl group on the surface thereof. Furthermore, in Japanese Patent No. 6856781, carbon black obtained from a thermal decomposition process is treated with an amino acid compound including at least one thiol group or disulfide group to obtain carbon black whose surface is activated. The recycled carbon black according to the present embodiment also includes carbon black that is treated to include a functional group on the surface thereof.

As the recycled carbon black, products commercially available from Strable Green Carbon Co., Ltd., LD Carbon Co., Ltd., etc., can be used.

The nitrogen adsorption specific surface area ($N_2SA$) of the carbon black is preferably greater than 80 m$^2$/g, more preferably greater than 90 m$^2$/g, further preferably greater than 100 m$^2$/g, and particularly preferably greater than 110 m$^2$/g from the viewpoint of reinforcing properties. In addition, the $N_2SA$ of the carbon black is preferably less than 200 m$^2$/g, more preferably less than 150 m$^2$/g, and further preferably less than 120 m$^2$/g from the viewpoint of heat generation properties and processability. The $N_2SA$ of the carbon black is measured by the above measurement method.

The average primary particle diameter of the carbon black is preferably greater than 15 nm, more preferably greater than 18 nm, and further preferably greater than 20 nm. In addition, this average primary particle diameter is preferably less than 50 nm, more preferably less than 40 nm, and further preferably less than 30 nm. The average primary particle diameter of the carbon black is measured by the above measurement method.

The content of the carbon black per 100 parts by mass of the rubber component is preferably 1 part by mass or more, more preferably 3 parts by mass or more, and further preferably 5 parts by mass or more. In addition, the content of the carbon black per 100 parts by mass of the rubber component is preferably 50 parts by mass or less, more preferably 40 parts by mass or less, and further preferably 30 parts by mass or less.

<Other Fillers>

The filler may include another filler other than the silica and the carbon black. The other filler is not particularly limited, and for example, a filler that is conventionally and generally used in the tire industry, such as aluminum hydroxide, calcium carbonate, alumina, clay, and talc, can be contained.

<Plasticizer>

The rubber composition according to the present embodiment contains a plasticizer, and contains a copolymer resin including cyclopentadiene as a monomer component, as the plasticizer.

The plasticizer is a material that imparts plasticity to the rubber component and is a concept including both a plasticizer that is liquid at 25°C and a plasticizer that is solid at 25°C. Examples of the plasticizer include resins, oils, liquid rubbers, and ester-based plasticizers. These plasticizers may be derived from mineral resources such as petroleum or natural gas, may be derived from biomass, or may be derived from naphtha recycled from rubber products or non-rubber products. In addition, low-molecular-weight hydrocarbon components obtained by thermal decomposition or extraction of used tires or products including various components may be used as plasticizers. One of these plasticizers may be used alone, or two or more of these plasticizers may be used in combination.

A content P of the plasticizer (in the case where two or more types are contained, the total content thereof) per 100 parts by mass of the rubber component is preferably 15 parts by mass or more, more preferably 18 parts by mass or more, further preferably 20 parts by mass or more, and particularly preferably 25 parts by mass or more. Meanwhile, the content is preferably less than 120 parts by mass, more preferably less than 100 parts by mass, and further preferably less than 80 parts by mass from the viewpoint of low fuel consumption performance.

<<Copolymer Resin Including Cyclopentadiene as Monomer Component>>

The copolymer resin including cyclopentadiene as a monomer component is not particularly limited as long as the copolymer resin is a resin including cyclopentadiene as a monomer component and may further include another monomer component described below. In addition, the copolymer resin may be hydrogenated or modified.

The other monomer component other than cyclopentadiene is not particularly limited and is preferably a monomer component that is commonly used in petroleum resins, more preferably a C9 fraction described below, or the like, and further preferably styrene and/or indene. The "styrene" constituting the monomer component may be a compound having a styrene structure other than styrene, and examples thereof include styrene, $\alpha$-methylstyrene, vinyl toluene, and chlorostyrene.

The copolymer resin including cyclopentadiene as a monomer component is preferably a copolymer resin including styrene and cyclopentadiene and/or dicyclopentadiene as a monomer component and may be a hydrogenated or modified product of this copolymer resin.

As the copolymer resin including cyclopentadiene as a monomer component, for example, products commercially available from Exxon Mobil Corporation, ENEOS Corporation, Zeon Corporation, Maruzen Petrochemical Co., Ltd., etc., can be used. One of these reins may be used alone, or two or more of these reins may be used in combination.

In the case where the copolymer resin including cyclopentadiene as a monomer component further includes styrene as a monomer component, the content of the styrene in 100% by mass of the copolymer resin is preferably 0.5% by mass or more, more preferably 0.8% by mass or more, further preferably 1.0% by mass or more, further preferably 2.0% by mass or more, further preferably 3.0% by mass or more, further preferably 4.0% by mass or more, and further preferably 5.0% by mass or more from the viewpoint of the effects of the present invention. In addition, the upper limit of the content of the styrene is not particularly limited and can be, for example, less than 50% by mass, less than 40% by mass, less than 30% by mass, less than 10% by mass, etc.

The softening point of the copolymer resin including cyclopentadiene as a monomer component is preferably higher than 70°C, more preferably higher than 80°C, further preferably higher than 90°C, and particularly preferably higher than 100°C from the viewpoint of the effects of the present invention. In addition, the softening point of the resin is preferably lower than 150°C, more preferably lower than 140°C, and further preferably lower than 130°C from the viewpoint of processability and improving the dispersibility of the rubber component and the filler. The softening point of the resin is measured by the above measurement method.

A total content D of the copolymer resin including cyclopentadiene as a monomer component, per 100 parts by mass of the rubber component, is preferably greater than 5 parts by mass, more preferably greater than 10 parts by mass, further preferably greater than 15 parts by mass, further preferably greater than 19 parts by mass, and particularly preferably greater than 22 parts by mass. In addition, this content is preferably less than 100 parts by mass, more preferably less than 80 parts by mass, further preferably less than 60 parts by mass, and particularly preferably less than 40 parts by mass from the viewpoint of processability.

(Other Resins)

The rubber composition according to the present embodiment may contain another resin other than the copolymer resin including cyclopentadiene as a monomer component. The other resin is not particularly limited, a resin that is commonly used in the tire industry can be used, and examples of such a resin include an aromatic vinyl-based resin, a C9-based resin, a C5-based resin, a C5C9-based resin, a terpene-based resin, a rosin-based resin, and a phenol-based resin. One of these resins may be used alone, or two or more of these resins may be used in combination.

<<Aromatic Vinyl-Based Resin>>

In this specification, the "aromatic vinyl-based resin" refers to a resin including at least one aromatic vinyl compound selected from the group consisting of styrene, $\alpha$-methylstyrene, vinyl toluene, p-chlorostyrene, etc., as a monomer component (excluding the copolymer resin including cyclopentadiene as a monomer component). As the aromatic vinyl-based resin, for the reasons that the resin is economic, is easily processed, and has excellent heat generation properties, an $\alpha$-methylstyrene or styrene homopolymer or a copolymer of $\alpha$-methylstyrene and styrene is preferable, and a copolymer of $\alpha$-methylstyrene and styrene is more preferable. As the aromatic vinyl-based resin, for example, products commercially available from Kraton Corporation, Eastman Chemical Company, Mitsui Chemicals, Inc., etc., can be used. One of these resins may be used alone, or two or more of these resins may be used in combination.

<<C9-Based Resin>>

In this specification, the "C9-based resin" refers to a resin obtained by polymerizing a C9 fraction (excluding the copolymer resin including cyclopentadiene as a monomer component) and may be either a resin obtained by polymerizing the C9 fraction alone or a copolymer obtained by copolymerizing the C9 fraction and another component. Examples of the C9 fraction include at least one petroleum fraction having 8 to 10 carbon atoms selected from the group consisting of vinyl toluene, alkylstyrene, indene, methylindene, etc. Specific examples of the C9-based resin include coumarone-indene resins, coumarone resins, and indene resins. One of these resins may be used alone, or two or more of these resins may be used in combination.

<<C5-Based Resin>>

In this specification, the "C5-based resin" refers to a resin obtained by polymerizing a C5 fraction other than cyclopentadiene and may be a hydrogenated or modified product of the resin. Examples of the C5 fraction other than cyclopentadiene include at least one petroleum fraction having 4 to 5 carbon atoms selected from the group consisting of dicyclopentadiene, isoprene, pentane, isopentane, neopentane, pentene, pentadiene, etc. One of these resins may be used alone, or two or more of these resins may be used in combination.

<<C5C9-Based Resin>>

The "C5 C9-based resin" refers to a resin obtained by copolymerizing the above C5 fraction and the above C9 fraction and may be a hydrogenated or modified product of the resin. As the C5C9-based resin, for example, products commercially available from Tosoh Corporation, Zibo Luhua Hongjin New Material Co., Ltd., etc., can be used. One of these resins may be used alone, or two or more of these resins may be used in combination.

<<Terpene-Based Resin>>

The terpene-based resin refers to a resin including at least one terpene compound selected from the group consisting of $\alpha$-pinene, $\beta$-pinene, limonene, dipentene, etc., as a monomer component having a highest content, and preferably including 50% by mole or more of the terpene compound, and may be a hydrogenated or modified product of the resin. Specific examples of the terpene-based resin include: a polyterpene resin including only one or more of the terpene compounds as a monomer component; an aromatic modified terpene resin including the terpene compound and an aromatic compound as a monomer component; and a terpene-phenol resin including the terpene compound and a phenol-based compound as a monomer component. Examples of the aromatic compound that serves as the monomer component of the aromatic modified terpene resin include at least one selected from the group consisting of styrene, $\alpha$-methylstyrene, vinyl toluene, divinyl toluene, etc. Examples of the phenol-based compound that serves as the monomer component of the terpene-phenol resin include at least one selected from the group consisting of phenol, bisphenol A, cresol, xylenol, etc. One of these resins may be used alone, or two or more of these resins may be used in combination.

<<Rosin-Based Resin>>

The rosin-based resin refers to a resin including at least one rosin acid compound selected from the group consisting of abietic acid, neoabietic acid, palustric acid, isopimaric acid, etc., and may be a hydrogenated or modified product of the resin. The rosin-based resin is not particularly limited, and examples of the rosin-based resin include natural resin rosins, and rosin-modified resins modified by hydrogenation, disproportionation, dimerization, esterification, etc., of the natural resin rosins. One of these resins may be used alone, or two or more of these resins may be used in combination.

<<Phenol-Based Resin>>

The phenol-based resin refers to a resin including a phenol compound such as phenol and cresol as a monomer component having a highest content, and preferably including 50% by mole or more of the phenol compound. The phenol-based resin is not particularly limited, and examples of the phenol-based resin include phenol formaldehyde resins, alkylphenol formaldehyde resins, alkylphenol-acetylene resins, and oil-modified phenol formaldehyde resins. One of these resins may be used alone, or two or more of these resins may be used in combination.

<<Softening Point>>

The softening point of the resin is preferably higher than 80°C, more preferably higher than 90°C, and further preferably higher than 100°C from the viewpoint of wet grip performance. In addition, the softening point of the resin is preferably lower than 150°C, more preferably lower than 140°C, and further preferably lower than 130°C from the viewpoint of processability and improving the dispersibility of the rubber component and the filler. The softening point of the resin is measured by the above measurement method.

(Plasticizers Other Than Resin)

An oil, a liquid rubber, and an ester-based plasticizer, which are plasticizers other than the resin, will be described.

(Oil)

Examples of the oil include a mineral oil, a plant oil, and an animal oil. From the viewpoint of life cycle assessment, oils obtained by refining waste oils that have been used in rubber mixers or engines and waste cooking oils that have been used at restaurants may be used. One of these oils may be used alone, or two or more of these oils may be used in combination.

In this specification, the mineral oil refers to an oil derived from mineral resources such as petroleum and natural gas. Examples of the mineral oil include paraffin-based oils (mineral oils), naphthene-based oils, and aromatic oils. Specific examples of the mineral oil include MES (Mild Extracted Solvate), DAE (Distillate Aromatic Extract), TDAE (Treated Distillate Aromatic Extract), TRAE (Treated Residual Aromatic Extract), and RAE (Residual Aromatic Extract). In addition, an oil having a low content of a polycyclic aromatic compound (PCA) can also be used as an environmental measure. Examples of the low PCA content oil include MES, TDAE, and heavy naphthene-based oils.

In this specification, examples of the plant oil include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan wax. Furthermore, examples of the plant oil include refined oils (salad oil, etc.) obtained by refining the above oils, ester exchange oils obtained by ester exchange of the above oils, hydrogenated oils obtained by hydrogenation of the above oils, thermally polymerized oils obtained by thermal polymerization of the above oils, oxidatively polymerized oils obtained by oxidation of the above oils, and waste edible oils collected as edible oils and the like. The plant oil may be liquid or solid at 25°C.

The plant oil according to the present embodiment preferably includes an acylglycerol and more preferably includes a triacylglycerol. In this specification, the acylglycerol refers to a compound in which the hydroxyl group of glycerin is esterified with a fatty acid. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer of three or more units. An acylglycerol that is a dimer or more can be obtained by thermal polymerization, oxidative polymerization, or the like. The acylglycerol may be liquid or solid at 25°C.

A method for confirming whether the acylglycerol is included in the rubber composition is not particularly limited, and whether the acylglycerol is included in the rubber composition can be confirmed by $^1$H-NMR measurement. For example, a rubber composition including triacylglycerol is immersed in deuterochloroform at 25°C for 24 hours, the rubber composition is removed, and $^1$H-NMR is then measured at room temperature. When the signal of tetramethylsilane (TMS) is set to 0.00 ppm, signals are observed around 5.26 ppm, 4.28 ppm, and 4.15 ppm, and these signals are inferred to be signals derived from hydrogen atoms bonded to carbon atoms adjacent to oxygen atoms of ester groups. The "around" in this paragraph refers to a range of $\pm 0.10$ ppm.

The fatty acid is not particularly limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Among them, as the fatty acid, a fatty acid having few double bonds, that is, a saturated fatty acid or a monounsaturated fatty acid, is desirably included, and oleic acid is preferable. As a plant oil including such a fatty acid, for example, a plant oil including a saturated fatty acid or a monounsaturated fatty acid may be used, or a plant oil modified by ester exchange or the like may also be used. In addition, a plant may be modified by breeding, genetic modification, or the like in order to produce a plant oil including such a fatty acid.

As the plant oil, for example, products of Idemitsu Kosan Co., Ltd., Sankyo Yuka Kogyo K.K., ENEOS Corporation, Olisoy, H&R, Hokoku Corporation, FUJI KOSAN COMPANY, LTD., The Nisshin OilliO Group, Ltd., etc., can be used.

Examples of the animal oil include fish oils, beef tallow, and oleyl alcohols derived therefrom.

In the case of containing an oil, the content of the oil per 100 parts by mass of the rubber component is preferably 5 parts by mass or more, more preferably 8 parts by mass or more, and further preferably 10 parts by mass or more from the viewpoint of processability. In addition, the content of the oil is preferably 60 parts by mass or less, more preferably 50 parts by mass or less, and further preferably 30 parts by mass or less from the viewpoint of the effects of the present invention.

(Liquid Rubber)

The liquid rubber is not particularly limited, as long as the liquid rubber is a polymer that is in a liquid state at room temperature (25°C), and examples of the liquid rubber include liquid butadiene polymers (liquid BRs), liquid styrene-butadiene copolymers (liquid SBRs), liquid isoprene polymers (liquid IRs), liquid styrene-isoprene copolymers (liquid SIRs), and liquid farnesene rubbers. One of these liquid rubbers may be used alone, or two or more of these liquid rubbers may be used in combination.

(Ester-Based Plasticizer)

Examples of the ester-based plasticizer include dibutyl adipate (DBA), diisobutyl adipate (DIBA), dioctyl adipate (DOA), di-2-ethylhexyl azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), and trixylenyl phosphate (TXP). One of these ester-based plasticizers may be used alone, or two or more of these ester-based plasticizers may be used in combination.

[Other Ingredients]

In addition to the rubber component, the filler, and the plasticizer, the rubber composition according to the present embodiment can contain ingredients that are conventionally and generally used in the tire industry, such as a processing aid, vulcanized rubber particles, a wax, stearic acid, zinc oxide, an antioxidant, a vulcanizing agent, and a vulcanization accelerator, as appropriate.

(Processing Aid)

Examples of the processing aid include fatty acid metal salts, fatty acid amides, amide esters, silica surfactants, mixtures of fatty acid metal salts and amide esters, and mixtures of fatty acid metal salts and fatty acid amides. One of these processing aids may be used alone, or two or more of these processing aids may be used in combination. As the processing aid, for example, products commercially available from SCHILL+SEILACHER GmbH, Performance Additives Sdn. Bhd., etc., can be used.

In the case of containing a processing aid, the content of the processing aid per 100 parts by mass of the rubber component is preferably more than 0.5 parts by mass, more preferably more than 1 part by mass, and further preferably more than 1.5 parts by mass from the viewpoint of exhibiting an effect of improving processability. In addition, the content of the processing aid is preferably less than 10 parts by mass, more preferably less than 8.0 parts by mass, and further preferably less than 5.0 parts by mass from the viewpoint of wear resistance and fracture strength.

(Vulcanized Rubber Particles)

The vulcanized rubber particles are particles made of vulcanized rubber, and specifically, rubber powder specified in JIS K 6316: 2017, etc., can be used. From the viewpoint of cost and consideration for the environment, recycled rubber powder produced from crushed materials of waste tires, etc., is preferable. One type of vulcanized rubber particles may be used alone, or two or more types of vulcanized rubber particles may be used in combination.

The vulcanized rubber particles are not particularly limited and may be either non-modified vulcanized rubber particles or modified vulcanized rubber particles.

As commercially available vulcanized rubber products, for example, products of Lehigh Technologies, Inc., MURAOKA RUBBER RECLAIMING Co., Ltd., etc., can be used.

(Wax)

The wax is not particularly limited, any waxes that are commonly used in the tire industry are suitable for use, and examples of the wax include mineral-based waxes and plant-derived waxes. Mineral-based waxes refer to waxes derived from mineral resources such as petroleum and natural gas. Plant-derived waxes refer to waxes derived from natural resources such as plants. Among them, mineral-based waxes are preferable. Examples of the plant-derived waxes include rice wax, carnauba wax, and candelilla wax. Examples of the mineral-based waxes include paraffin wax, microcrystalline wax, and refined special waxes thereof, and paraffin wax is preferable. The wax according to the present embodiment does not include stearic acid. As the wax, for example, waxes commercially available from OUCHI SHINKO CHEMICAL INDUSTRIAL Co., Ltd., NIPPON SEIRO CO., LTD., Paramelt B.V, etc., can be used. One of these waxes may be used alone, or two or more of these waxes may be used in combination.

In the case of containing a wax, the content of the wax per 100 parts by mass of the rubber component is preferably greater than 0.5 parts by mass, more preferably greater than 1.0 part by mass, and further preferably greater than 1.5 parts by mass from the viewpoint of the weather resistance of the rubber. In addition, the content of the wax is preferably less than 10 parts by mass, more preferably less than 7.0 parts by mass, and further preferably less than 5.0 parts by mass from the viewpoint of preventing whitening of a tire due to blooming.

(Stearic Acid)

In the case of containing stearic acid, the content of the stearic acid per 100 parts by mass of the rubber component is preferably greater than 0.5 parts by mass, more preferably greater than 1.0 part by mass, and further preferably greater than 1.5 parts by mass from the viewpoint of processability. In addition, the content of the stearic acid is preferably less than 10 parts by mass, more preferably less than 8.0 parts by mass, and further preferably less than 5.0 parts by mass from the viewpoint of a vulcanization rate.

(Zinc Oxide)

In the case of containing zinc oxide, the content of the zinc oxide per 100 parts by mass of the rubber component is preferably greater than 0.5 parts by mass, more preferably greater than 1.0 part by mass, and further preferably greater than 1.5 parts by mass from the viewpoint of processability. In addition, the content of the zinc oxide is preferably less than 10 parts by mass, more preferably less than 8.0 parts by mass, and further preferably less than 5.0 parts by mass from the viewpoint of wear resistance.

(Antioxidant)

The antioxidant is not particularly limited, and examples of the antioxidant include: naphthylamine-based antioxidants such as phenyl-$\alpha$-naphthylamine; diphenylamine-based antioxidants such as octylated diphenylamine and 4,4'-bis($\alpha,\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products of Seiko Chemical Co., Ltd., SUMITOMO CHEMICAL COMPANY, LIMITED, OUCHI SHINKO CHEMICAL INDUSTRIAL Co., Ltd., Flexsys, etc., can be used. One of these antioxidants may be used alone, or two or more of these antioxidants may be used in combination.

In the case of containing an antioxidant, the content of the antioxidant per 100 parts by mass of the rubber component is preferably greater than 1 part by mass, more preferably greater than 2 parts by mass, and further preferably greater than 3 parts by mass from the viewpoint of the ozone crack resistance of the rubber. In addition, the content of the antioxidant is preferably less than 10 parts by mass, more preferably less than 8 parts by mass, and further preferably less than 5 parts by mass from the viewpoint of wear resistance and wet grip performance.

(Vulcanizing Agent)

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used. One of these vulcanizing agents may be used alone, or two or more of these vulcanizing agents may be used in combination.

In the case of containing sulfur as the vulcanizing agent, the content of the sulfur per 100 parts by mass of the rubber component is preferably 0.1 parts by mass or more, more preferably 0.3 parts by mass or more, and further preferably 0.5 parts by mass or more from the viewpoint of ensuring a sufficient vulcanization reaction. In addition, the content of the sulfur is preferably 5.0 parts by mass or less, more preferably 4.0 parts by mass or less, and further preferably 3.0 parts by mass or less from the viewpoint of preventing deterioration. In the case of using oil-containing sulfur as the vulcanizing agent, the content of the vulcanizing agent is the total content of pure sulfur contained in the oil-containing sulfur.

Examples of vulcanizing agents other than sulfur include alkylphenol-sulfur chloride condensates, 1,6-hexamethylene sodium dithiosulfate dihydrate, and 1,6-bis(N,N'-dibenzylthiocarbamoyldithio)hexane. As these vulcanizing agents other than sulfur, products commercially available from Taoka Chemical Co., Ltd., LANXESS, Flexsys, etc., can be used. One of these vulcanizing agents may be used alone, or two or more of these vulcanizing agents may be used in combination.

(Vulcanization Accelerator)

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. Among them, sulfenamide-based vulcanization accelerators, thiazole-based vulcanization accelerators, and guanidine-based vulcanization accelerators are preferable. One of these vulcanization accelerators may be used alone, or two or more of these vulcanization accelerators may be used in combination.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Among them, N-cyclohexyl-2-benzothiazolyl sulfenamide (CBS) is preferable.

Examples of the thiazole-based vulcanization accelerators include 2-mercaptobenzothiazole, a cyclohexylamine salt of 2-mercaptobenzothiazole, and di-2-benzothiazolyl disulfide. Among them, 2-mercaptobenzothiazole is preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine (DPG) is preferable.

In the case of containing a vulcanization accelerator, the content of the vulcanization accelerator per 100 parts by mass of the rubber component is preferably 1 part by mass or more and more preferably 1.5 parts by mass or more. In addition, the content of the vulcanization accelerator per 100 parts by mass of the rubber component is preferably 8 parts by mass or less, more preferably 7 parts by mass or less, and further preferably 6 parts by mass or less. When the content of the vulcanization accelerator is within the above range, there is a tendency that a fracture strength and elongation can be ensured.

<Various Materials Including Carbon Atoms>

In this specification, various materials including carbon atoms (e.g., rubber, oil, resin, vulcanization accelerator, antioxidant, surfactant, etc.) may be derived from carbon dioxide in the atmosphere. As methods for obtaining the various materials from carbon dioxide, carbon dioxide may be directly converted, or methane obtained through a methanation process of synthesizing methane from carbon dioxide may be converted.

[Production Method]

The rubber composition can be produced by a known method. For example, the above components are kneaded by using a rubber kneading device such as an open roll or a sealed kneading machine (Banbury mixer, kneader, or the like), whereby the rubber composition can be produced.

The kneading step includes, for example, a base kneading step of kneading additives and the ingredients other than the vulcanizing agent and the vulcanization accelerator, and a final kneading (F kneading) step of adding the vulcanizing agent and the vulcanization accelerator to the kneaded product obtained in the base kneading step and kneading the mixture. Furthermore, the base kneading step can also be divided into a plurality of steps, as desired. In the case of dividing the base kneading step, a method therefor may be (1) a method in which a portion of the ingredients and additives is kneaded in advance to form a masterbatch, then the remaining ingredients and additives are added to the obtained masterbatch, and the mixture is kneaded, (2) all the ingredients and additives to be kneaded in the base kneading step are kneaded at once and then the kneaded product is re-milled one or more times, etc. In the method described in (1) above, the number of masterbatches is not limited and may be two or more. In addition, in the case where the number of masterbatches is two or more, all the ingredients and additives to be used in the base kneading step may be allocated to any of the masterbatches.

The kneading condition is not particularly limited, and examples thereof include a condition that: kneading is performed for 3 to 10 minutes at a discharge temperature of 150 to 170°C in the base kneading step; and kneading is performed for 1 to 5 minutes at 70 to 110°C in the final kneading step.

The tire according to the present embodiment can be produced by a normal method using the above rubber composition. Specifically, the unvulcanized rubber composition is extruded into the shape of the tread portion, and the unvulcanized tread portion is attached and shaped together with other tire members on a tire shaping machine by a normal method to form an unvulcanized tire. The unvulcanized tire obtained thus is heated and pressurized in a vulcanizer, whereby the tire can be produced. The vulcanization condition is not particularly limited, and examples thereof include a condition that vulcanization is performed at 150 to 200°C for 10 to 30 minutes.

[Applications]

In this specification, examples of the tire include pneumatic tires and non-pneumatic tires, and pneumatic tires are preferable. The pneumatic tires can be used as tires for a passenger car, tires for a large passenger car, tires for a large SUV, heavy duty tires, tires for a small truck, tires for a motorcycle, tires for racing (high-performance tires), etc. Among them, the pneumatic tires are suitable for use as heavy duty tires and are optimal for use as tires for an electric vehicle (EV). In this specification, a heavy duty tire is a tire that is designed to be mounted on a four-wheeled vehicle and has a maximum load capacity of 1000 kg or more. The maximum load capacity of the heavy duty tire is preferably 1200 kg or more and more preferably 1400 kg or more.

The following will describe examples that are considered preferable when implementing the present invention, but the scope of the present invention is not limited to these examples. The results obtained through calculations based on the evaluation methods described below for rubber compositions and tires obtained in accordance with each table using various chemicals listed below are shown in the tables.

<Various Chemicals>

Chemicals used in Examples and Comparative Examples are listed below.

NR: TSR 20

SBR: Modified SBR (styrene content: 30% by mass, vinyl content: 20% by mole, Tg: -51°C, Mw: 880 thousand) produced in Production Example described below.

BR: UBEPOL BR (registered trademark) 150B (unmodified BR, cis content: 97% by mole, Mw: 440 thousand) manufactured by Ube Corporation.

Carbon black: SEAST N220 ($N_2SA$: 114 $m^2$/g, average primary particle diameter: 22 nm) manufactured by Tokai Carbon Co., Ltd.

Silica: ULTRASIL VN3 ($N_2SA$: 175 $m^2$/g, average primary particle diameter: 18 nm) manufactured by Evonik Degussa GmbH.

Silane coupling agent: Si266 (bis(3-triethoxysilylpropyl)disulfide) manufactured by Evonik Degussa GmbH.

Resin 1: Oppera PR383 (hydrogenated DCPD-C9 resin including styrene and cyclopentadiene as a monomer component, Mw: 770, softening point: 103°C, styrene content: 1.78% by mass) manufactured by Exxon Mobil Corporation.

Resin 2: Oppera PR-120 (hydrogenated DCPD resin including cyclopentadiene as a monomer component, softening point: 120°C) manufactured by Exxon Mobil Corporation.

Resin 3: SYLVATARAXX 4401 ($\alpha$-methylstyrene resin, Mw: 700, softening point: 85°C) manufactured by Kraton Corporation.

Oil: Diana Process NH-70S (aromatic process oil) manufactured by Idemitsu Kosan Co., Ltd.

Wax: OZOACE Wax (paraffin wax) manufactured by NIPPON SEIRO CO., LTD.

Antioxidant 1: NOCRAC 6C (6PPD) (N-(1,3-dimethylbutyl)-N'-phenyl-p-phenylenediamine) manufactured by OUCHI SHINKO CHEMICAL INDUSTRIAL Co., Ltd.

Antioxidant 2: NOCRAC FR (2,2,4-trimethyl-1,2-dihydroquinoline polymer) manufactured by OUCHI SHINKO CHEMICAL INDUSTRIAL Co., Ltd.

Stearic acid: bead stearic acid, Camellia, manufactured by NOF Corporation

Zinc oxide: Zinc Oxide Type-1 manufactured by Mitsui Mining & Smelting Co., Ltd.

Sulfur: powdery sulfur manufactured by Tsurumi Chemical Industry Co., Ltd.

Vulcanization accelerator 1: NOCCELER CZ (N-cyclohexyl-2-benzothiazolyl sulfenamide (CBS)) manufactured by OUCHI SHINKO CHEMICAL INDUSTRIAL Co., Ltd.

Vulcanization accelerator 2: NOCCELER D (1,3-diphenylguanidine (DPG)) manufactured by OUCHI SHINKO CHEMICAL INDUSTRIAL Co., Ltd.

Production Example: Production of SBR

A nitrogen-purged autoclave reactor is charged with cyclohexane, tetrahydrofuran, styrene, and 1,3-butadiene. The ratio of styrene to 1,3-butadiene is adjusted such that the styrene content is 30% by mass. The temperature of the contents of the reactor is adjusted to 20°C, and then n-butyllithium is added to initiate polymerization. The polymerization is carried out under heat insulating conditions, and the maximum temperature reached 85°C. When the polymerization conversion rate reaches 99%, 1,3-butadiene is added to the reaction solution, and further polymerization is carried out for 5 minutes. Thereafter, the formation of a polymer having a molecular weight (Mw) of 880 thousand by GPC is confirmed, N,N-bis(trimethylsilyl)-3-aminopropyltriethoxysilane is added as a modifier to the reaction solution, and a reaction is carried out. After the end of the polymerization reaction, 2,6-di-tert-butyl-p-cresol is added to the reaction solution. Subsequently, the solvent is removed by steam stripping, and drying by a heat roll adjusted to a temperature of 110°C is performed to obtain an SBR.

(Examples and Comparative Examples)

In accordance with each of blending formulas shown in Table 1 and Table 2, the chemicals other than the sulfur and the vulcanization accelerator are kneaded for 1 to 10 minutes by using a 1.7-L sealed Banbury mixer until reaching a discharge temperature of 150 to 160°C, to obtain a kneaded product. Next, the sulfur and the vulcanization accelerator are added to the obtained kneaded product, and the mixture is kneaded for 4 minutes by using a twin-screw open roll until reaching 105°C, to obtain an unvulcanized rubber composition. The unvulcanized rubber composition is extruded into the shape of a tire tread by using an extruder having a die with a predetermined shape and is attached together with other tire members to produce an unvulcanized tire, and the unvulcanized tire is vulcanized at 170°C to obtain each test tire (size: 245/40R19).

<Measurement of 0°C tan$\delta$>

The tread portion of each test tire is cut into a size of 20 mm in length, 4 mm in width, and 1 mm in thickness such that the tire circumferential direction corresponds to a long side and the tire radial direction is the thickness direction, thereby producing a rubber test piece. For each rubber test piece, the loss tangent is measured under the conditions of a temperature of 0°C, a frequency of 10 Hz, an initial strain of 10%, a dynamic strain of $\pm 2.5\%$, and tensile mode using EPLEXOR series manufactured by NETZSCH-Gerätebau GmbH.

<Wet Grip Performance>

The respective test tires are mounted to all the wheels of a vehicle (FF car produced in Japan with an engine displacement of 2000 cc), and a braking distance from an initial speed of 100 km/h on a wet asphalt road surface is obtained. The measurement results are shown as indexes obtained using the following calculation formula. A higher index indicates a shorter braking distance and better wet grip performance. For the wet grip performance indexes, a reference comparative example is Comparative Example 1.

(Wet grip performance index)

= (braking distance of reference comparative example)/(braking distance of each test tire) × 100

[Table 1]

| | | Example | | | |
|---|---|---|---|---|---|
| | | 1 | 2 | 3 | 4 |
| Blending amount (parts by mass) | NR | - | - | - | 40 |
| | SBR | 80 | 80 | 80 | 30 |
| | BR | 20 | 20 | 20 | 30 |
| | Carbon black | 5 | 5 | 5 | 5 |
| | Silica | 60 | 60 | 50 | 60 |
| | Silane coupling agent | 4.8 | 4.8 | 4.0 | 4.8 |
| | Resin 1 | 20 | - | 20 | 30 |
| | Resin 2 | - | 20 | - | - |
| | Oil | 10 | 10 | 10 | 50 |
| | Wax | 2.0 | 2.0 | 2.0 | 2.0 |
| | Antioxidant 1 | 3.0 | 3.0 | 3.0 | 3.0 |
| | Antioxidant 2 | 1.0 | 1.0 | 1.0 | 1.0 |
| | Stearic acid | 2.0 | 2.0 | 2.0 | 2.0 |
| | Zinc oxide | 2.0 | 2.0 | 2.0 | 2.0 |
| | Sulfur | 2.0 | 2.0 | 2.0 | 1.0 |
| | Vulcanization accelerator 1 | 2.5 | 2.5 | 2.5 | 2.0 |
| | Vulcanization accelerator 2 | 2.5 | 2.5 | 2.5 | 2.0 |
| | Shoulder rib | Presence | Presence | Presence | Presence |
| Sea ratio | $N_C$ (%) | 2.0 | 2.0 | 2.0 | 2.0 |
| | $N_M$ (%) | 6.0 | 6.0 | 6.0 | 6.0 |
| | $N_S$ (%) | 24.0 | 24.0 | 24.0 | 24.0 |
| | N (%) | 8.0 | 8.0 | 8.0 | 8.0 |
| | 0°C tanδ | 0.62 | 0.58 | 0.60 | 0.72 |
| | P (parts by mass) | 30 | 30 | 30 | 80 |
| | D (parts by mass) | 20 | 20 | 20 | 30 |
| | N/P | 0.27 | 0.27 | 0.27 | 0.10 |
| | 0°C tanδ/N | 0.08 | 0.07 | 0.08 | 0.09 |
| | D × N | 160 | 160 | 160 | 240 |
| | Wet grip performance index | 118 | 119 | 138 | 109 |

[Table 1] (cont.)

| | | Example | | | |
|---|---|---|---|---|---|
| | | 5 | 6 | 7 | 8 |
| Blending amount (parts by mass) | NR | - | - | - | - |
| | SBR | 80 | 80 | 80 | 80 |
| | BR | 20 | 20 | 20 | 20 |
| | Carbon black | 5 | 5 | 5 | 5 |
| | Silica | 90 | 60 | 60 | 60 |
| | Silane coupling agent | 7.2 | 4.8 | 4.8 | 4.8 |
| | Resin 1 | 30 | 20 | 20 | 20 |
| | Resin 2 | - | - | - | - |
| | Oil | 40 | 10 | 10 | - |
| | Wax | 2.0 | 2.0 | 2.0 | 2.0 |
| | Antioxidant 1 | 3.0 | 3.0 | 3.0 | 3.0 |
| | Antioxidant 2 | 1.0 | 1.0 | 1.0 | 1.0 |
| | Stearic acid | 2.0 | 2.0 | 2.0 | 2.0 |
| | Zinc oxide | 2.0 | 2.0 | 2.0 | 2.0 |
| | Sulfur | 2.0 | 2.0 | 2.0 | 2.0 |
| | Vulcanization accelerator 1 | 2.5 | 2.5 | 2.5 | 2.5 |
| | Vulcanization accelerator 2 | 2.5 | 2.5 | 2.5 | 2.5 |
| | Shoulder rib | Presence | Presence | Presence | Presence |
| Sea ratio | $N_C$ (%) | 1.0 | 4.0 | 2.0 | 2.0 |
| | $N_M$ (%) | 2.0 | 3.0 | 7.0 | 11.0 |
| | $N_S$ (%) | 17.0 | 24.0 | 24.0 | 33.0 |
| | N (%) | 3.0 | 7.0 | 9.0 | 13.0 |
| | 0°C tanδ | 0.48 | 0.62 | 0.62 | 0.61 |
| | P (parts by mass) | 70 | 30 | 30 | 20 |
| | D (parts by mass) | 30 | 20 | 20 | 20 |
| | N/P | 0.04 | 0.23 | 0.30 | 0.65 |
| | 0°C tanδ/N | 0.16 | 0.09 | 0.07 | 0.05 |
| | D × N | 90 | 140 | 180 | 260 |
| | Wet grip performance index | 110 | 121 | 116 | 107 |

[Table 2]

| | | Comparative Example | | | |
|---|---|---|---|---|---|
| | | 1 | 2 | 3 | 4 |
| Blending amount (parts by mass) | SBR | 80 | 80 | 80 | 80 |
| | BR | 20 | 20 | 20 | 20 |
| | Carbon black | 5 | 5 | 5 | 5 |
| | Silica | 60 | 60 | 60 | 60 |
| | Silane coupling agent | 4.8 | 4.8 | 4.8 | 4.8 |
| | Resin 1 | - | 5 | - | - |
| | Resin 2 | - | - | - | - |
| | Resin 3 | 20 | - | 3 | 5 |
| | Oil | 10 | - | - | - |
| | Wax | 2.0 | 2.0 | 2.0 | 2.0 |
| | Antioxidant 1 | 3.0 | 3.0 | 3.0 | 3.0 |
| | Antioxidant 2 | 1.0 | 1.0 | 1.0 | 1.0 |
| | Stearic acid | 2.0 | 2.0 | 2.0 | 2.0 |
| | Zinc oxide | 2.0 | 2.0 | 2.0 | 2.0 |
| | Sulfur | 2.0 | 2.0 | 2.0 | 2.0 |
| | Vulcanization accelerator 1 | 2.5 | 2.5 | 2.5 | 2.5 |
| | Vulcanization accelerator 2 | 2.5 | 2.5 | 2.5 | 2.5 |
| | Shoulder rib | Presence | Presence | Presence | Presence |
| Sea ratio | $N_C$ (%) | 6.0 | 6.0 | 5.0 | 6.0 |
| | $N_M$ (%) | 12.0 | 12.0 | 9.0 | 12.0 |
| | $N_S$ (%) | 24.0 | 24.0 | 24.0 | 24.0 |
| | N (%) | 18.0 | 18.0 | 14.0 | 18.0 |
| | 0°C tanδ | 0.60 | 0.43 | 0.43 | 0.45 |
| | P (parts by mass) | 30 | 5 | 3 | 5 |
| | D (parts by mass) | 0 | 5 | 0 | 0 |
| | N/P | 0.60 | 3.60 | 4.67 | 3.60 |
| | 0°C tanδ/N | 0.03 | 0.02 | 0.03 | 0.03 |
| | D × N | 0 | 90 | 0 | 0 |
| | Wet grip performance index | 100 | 75 | 76 | 77 |

[Table 2] (cont.)

| | | Comparative Example | | |
|---|---|---|---|---|
| | | 5 | 6 | 7 |
| Blending amount (parts by mass) | SBR | 80 | 80 | 80 |
| | BR | 20 | 20 | 20 |
| | Carbon black | 5 | 5 | 5 |
| | Silica | 60 | 60 | 60 |
| | Silane coupling agent | 4.8 | 4.8 | 4.8 |
| | Resin 1 | 3 | - | 20 |
| | Resin 2 | - | - | - |
| | Resin 3 | - | 3 | - |
| | Oil | - | - | 10 |
| | Wax | 2.0 | 2.0 | 2.0 |
| | Antioxidant 1 | 3.0 | 3.0 | 3.0 |
| | Antioxidant 2 | 1.0 | 1.0 | 1.0 |
| | Stearic acid | 2.0 | 2.0 | 2.0 |
| | Zinc oxide | 2.0 | 2.0 | 2.0 |
| | Sulfur | 2.0 | 2.0 | 2.0 |
| | Vulcanization accelerator 1 | 2.5 | 2.5 | 2.5 |
| | Vulcanization accelerator 2 | 2.5 | 2.5 | 2.5 |
| | Shoulder rib | Presence | Presence | Absence |
| Sea ratio | $N_C$ (%) | 5.0 | 2.0 | 6.0 |
| | $N_M$ (%) | 9.0 | 5.0 | 12.0 |
| | $N_S$ (%) | 18.0 | 18.0 | - |
| | N (%) | 14.0 | 7.0 | 18.0 |
| | 0°C tanδ | 0.42 | 0.43 | 0.62 |
| | P (parts by mass) | 3 | 3 | 30 |
| | D (parts by mass) | 3 | 0 | 20 |
| | N/P | 4.67 | 2.33 | 0.60 |
| | 0°C tanδ/N | 0.03 | 0.06 | 0.03 |
| | D × N | 42 | 0 | 360 |
| | Wet grip performance index | 68 | 78 | 73 |

<Embodiment>

An example of an embodiment of the present invention is shown below.

[1] A tire having a tread portion, wherein

a tread surface of the tread portion has four circumferential main grooves, a crown rib demarcated by the circumferential main grooves, and a pair of middle ribs adjacent to the crown rib across the circumferential main grooves,
a total sea ratio N (%) of the crown rib and the middle ribs is greater than 0 and less than 15,
the tread portion is composed of a rubber composition including a rubber component, a filler, and a plasticizer,
the plasticizer contains a copolymer resin including cyclopentadiene as a monomer component, and
when a total amount of the plasticizer per 100 parts by mass of the rubber component in the rubber composition is denoted by P (parts by mass), N/P is less than 3.0 and preferably less than 2.0.

[2] The tire according to [1] above, wherein the N (%) is less than 12.

[3] The tire according to [1] or [2] above, wherein the N (%) is less than 9.

[4] The tire according to any one of [1] to [3] above, wherein a sea ratio $N_c$ (%) of the crown rib is less than 3.

[5] The tire according to any one of [1] to [4] above, wherein a sea ratio $N_m$ (%) of the middle ribs is less than 17, preferably less than 15, more preferably less than 10, and further preferably less than 8.

[6] The tire according to any one of [1] to [5] above, wherein the tread surface further has one or two shoulder ribs, and a sea ratio $N_S$ (%) of each shoulder rib is greater than 20 and preferably greater than 22.

[7] The tire according to any one of [1] to [6] above, wherein the rubber component contains 90% by mass or more of a butadiene-based rubber.

[8] The tire according to any one of [1] to [7] above, wherein the filler contains 60% by mass or more, preferably 70% by mass or more, more preferably 80% by mass or more, and further preferably 90% by mass or more of silica.

[9] The tire according to any one of [1] to [8] above, wherein the plasticizer contains a copolymer resin including styrene and cyclopentadiene as a monomer component.

[10] The tire according to any one of [1] to [9] above, wherein a ratio ($0°C \tan\delta/N$) of $\tan\delta$ at $0°C$ ($0°C \tan\delta$) of the rubber composition to the N is greater than 0.06 and preferably greater than 0.08.

[11] The tire according to any one of [1] to [10] above, wherein when a total amount of the copolymer resin including cyclopentadiene as a monomer component, per 100 parts by mass of the rubber component in the rubber composition, is denoted by D (parts by mass), $D \times N$ is 80 or more, preferably 100 or more, and more preferably 140 or more.

[12] The tire according to any one of [1] to [11] above, wherein N/P is less than 1.0 and preferably less than 0.5.

[13] The tire according to any one of [1] to [12] above being for an electric vehicle.

**Claims**

1.  A tire having a tread portion, wherein

    a tread surface of the tread portion has four circumferential main grooves (2), a crown rib (3) demarcated by the circumferential main grooves (2), and a pair of middle ribs (4) adjacent to the crown rib (3) across the circumferential main grooves (2),
    a total sea ratio N (%) of the crown rib (3) and the middle ribs (4) is greater than 0 and less than 15,
    the tread portion is composed of a rubber composition including a rubber component, a filler, and a plasticizer,
    the plasticizer contains a copolymer resin including cyclopentadiene as a monomer component, and
    when a total amount of the plasticizer per 100 parts by mass of the rubber component in the rubber composition is denoted by P (parts by mass), N/P is less than 3.0.

2.  The tire according to claim 1, wherein the N (%) is less than 12.

3.  The tire according to claim 1 or 2, wherein the N (%) is less than 9.

4.  The tire according to any one of claims 1 to 3, wherein a sea ratio $N_c$ (%) of the crown rib (3) is less than 3.

5.  The tire according to any one of claims 1 to 4, wherein a sea ratio $N_m$ (%) of the middle ribs (4) is less than 17.

6.  The tire according to any one of claims 1 to 5, wherein the tread surface further has one or two shoulder ribs (5), and a sea ratio $N_S$ (%) of each shoulder rib (5) is greater than 20.

7.  The tire according to any one of claims 1 to 6, wherein the rubber component contains 90% by mass or more of a butadiene-based rubber.

8.  The tire according to any one of claims 1 to 7, wherein the filler contains 60% by mass or more of silica.

9.  The tire according to any one of claims 1 to 8, wherein the plasticizer contains a copolymer resin including styrene and cyclopentadiene as a monomer component.

10. The tire according to any one of claims 1 to 9, wherein a ratio ($0°C \tan\delta/N$) of $\tan\delta$ at $0°C$ ($0°C \tan\delta$) of the rubber composition to the N is greater than 0.06.

11. The tire according to any one of claims 1 to 10, wherein when a total amount of the copolymer resin including cyclopentadiene as a monomer component, per 100 parts by mass of the rubber component in the rubber composition, is denoted by D (parts by mass), D $\times$ N is 80 or more.

12. The tire according to any one of claims 1 to 11, wherein N/P is less than 1.0.

13. The tire according to any one of claims 1 to 12 being for an electric vehicle.

**Fig.1**

Europäisches
Patentamt

European
Patent Office

Office européen
des brevets

# EUROPEAN SEARCH REPORT

**Application Number**

EP 25 18 4927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 169 739 A1 (SUMITOMO RUBBER IND [JP]) 26 April 2023 (2023-04-26) * claim 1; table 1 * ----- | 1-13 | INV. B60C1/00 C08L9/06 B60C11/03 |
| A | EP 4 223 556 A1 (SUMITOMO RUBBER IND [JP]) 9 August 2023 (2023-08-09) * claim 1 * ----- | 1-13 | |
| A | EP 3 254 872 A1 (SUMITOMO RUBBER IND [JP]) 13 December 2017 (2017-12-13) * paragraph [0001]; claim 1 * ----- | 1-13 | |
| A | EP 1 559 590 A2 (SUMITOMO RUBBER IND [JP]) 3 August 2005 (2005-08-03) * claim 1 * ----- | 1-13 | |
| | | | **TECHNICAL FIELDS SEARCHED (IPC)** B60C C08L |

The present search report has been drawn up for all claims

| Place of search | Date of completion of the search | Examiner |
|---|---|---|
| Munich | 16 September 2025 | Höfler, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 4927

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | | Publication date |
|---|---|---|---|---|---|
| EP 4169739 | A1 | 26-04-2023 | EP | 4169739 A1 | 26-04-2023 |
| | | | JP | 7711551 B2 | 23-07-2025 |
| | | | JP | 2023062957 A | 09-05-2023 |
| EP 4223556 | A1 | 09-08-2023 | CN | 116533683 A | 04-08-2023 |
| | | | EP | 4223556 A1 | 09-08-2023 |
| | | | JP | 2023113413 A | 16-08-2023 |
| EP 3254872 | A1 | 13-12-2017 | CN | 107471922 A | 15-12-2017 |
| | | | EP | 3254872 A1 | 13-12-2017 |
| | | | JP | 6784066 B2 | 11-11-2020 |
| | | | JP | 2017218042 A | 14-12-2017 |
| EP 1559590 | A2 | 03-08-2005 | CN | 1647956 A | 03-08-2005 |
| | | | EP | 1559590 A2 | 03-08-2005 |
| | | | JP | 4044526 B2 | 06-02-2008 |
| | | | JP | 2005212524 A | 11-08-2005 |
| | | | US | 2005161138 A1 | 28-07-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020041035 A
- JP 2009002594 A
- EP 3427975 A
- JP 6856781 B
- EP 3173251 A
- FR 224

### Non-patent literature cited in the description

- *Akita Prefectural University Web Journal B*, 2019, vol. 6, 216-222
- *Rubber Chemistry and Technology*, 2012, vol. 85 (3), 408-449
- Comparison of surface morphology and chemistry between pyrolytic carbon black and commercially available carbon black. *Powder Technology*, 2005, vol. 160, 190-193